# EUROPEAN PATENT APPLICATION

(11) **EP 4 119 746 A1**
(43) Date of publication of application: **18.01.2023**
(21) Application number: 22184715.5
(22) Date of filing: 13.07.2022
(51) Int. Cl.: E04H 15/18, E04B 1/00, E04F 10/06

(54) **TERRACE ROOF**

(30) Priority: 14.07.2021 NL 2028725
(71) Applicant: Alcre (Best) B.V., 5683 CP Best (NL)
(72) Inventor: NAE, Dan, BEST (NL)
(74) Representative: Algemeen Octrooi- en Merkenbureau B.V.

(57) **Abstract**

The invention provides a terrace roof comprising uprights, two horizontal first beams and two horizontal second beams, which first beams and second beams are connected to one another at their ends and form a framework which rests on the uprights and which has a rectangular shape in top view. The terrace roof further comprising intermediate beams which extend parallel to and between the two second beams and the respective ends of which are connected to the two first beams, wherein combinations of two intermediate beams situated next to one another and of the two horizontal first beams, and combinations of each second beam and the intermediate beam situated next to it and of the two horizontal first beams, form rectangular frames. The terrace roof also further comprises a transparent roof panel for each frame, said roof panels each extending within the associated frame. Each roof panel is inclined with respect to a horizontal plane in a direction parallel to the two first beams in order to discharge rainwater.

## Description

The present invention relates to a terrace roof. In European publication EP 3299537 A1, a description is given, with reference to Figure 6 thereof, of a terrace roof having two parallel beams which extend between a rear side and front side of the terrace roof. The ends of each beam rest on a front upright and a rear upright. Provided between the beams are two roof surfaces which are inclined in opposite directions and which are together provided in the form of a pitched roof. Rainwater that falls on the terrace roof is therefore discharged partially in the direction of the rear uprights and partially in the direction of the front uprights. Each roof surface extends within the height of the beams. The described roof has the disadvantage that, proceeding from a determined minimum angle of inclination of the used inclined roof surfaces to be able to satisfactorily discharge rainwater, and also from the desire for the roof surfaces to extend completely within the height of the beams, this height has to be relatively great within the customary dimensions of terrace roofs in top view. In addition, the actual dimensions of the terrace roof, more specifically the length of the aforementioned beams, partly determine the minimum required height of the beams.

The present invention aims to provide a roof which affords the possibility of reducing, with an unchanging angle of inclination of roof panels, the required height of the beams and of also making it fundamentally independent, or at least virtually independent, of the dimensions of the roof. To this end, the invention provides a roof according to Claim 1. The first beams are the beams which during use of the roof extend against the façade of a building parallel to this facade. The rainwater that falls on a roof according to the invention will therefore not be discharged in a direction perpendicular to the façade, as described in EP 3299537 A1, but actually in a direction perpendicular to said roof and thus parallel to the façade. By using (at least two) intermediate beams whose respective ends are connected to the two first beams, that is to say form a rigid unit with the two first beams, the framework is divided into three or more rectangular frames, wherein a roof panel is provided per frame, each roof panel extending within a frame so that no rainwater can fall through the frame. Each of the roof panels is inclined in a direction parallel to the two first beams, that is to say in a direction parallel to the façade when using the roof as mentioned above. Each intermediate beam supports two adjacent inclined roof panels either on the high sides of each of the two roof panels, or on the low sides of each of the two roof panels, or on the high side of one roof panel and on the low side of the other roof panel. The number of intermediate beams and thus the number of frames can be selected in dependence on the length of the beams. The dimensions of each frame viewed in a direction parallel to the first beams, that is to say in the direction in which the roof panels are inclined, may, in practice, be selected to be smaller than the dimensions of the two frames of the terrace roof according to Figure 6 of EP 3299537 A1 viewed in the direction of inclination of the relevant roof surfaces. The last-mentioned dimensions are roughly half the length of the beams and are approximately directly proportional to the length of the beams.

The advantages of the invention may be relevant, in particular, if the length of each first beam is greater than the length of each second beam and than the length of each intermediate beam.

Rainwater may be discharged efficiently if the angle of inclination by which each roof panel is inclined with respect to a horizontal plane is between 2 degrees and 15 degrees.

A practical embodiment in which the height of each first beam and/or of each second beam can remain relatively limited may be achieved if the distance between two intermediate beams associated with a combination and/or between a second beam associated with a combination and an intermediate beam is between 30 cm and 120 cm, further preferably between 60 and 90 cm.

If the roof panels are inclined in the same direction, it is possible to achieve the advantage that the intermediate beams can be of identical design. In addition, rainwater can thus be discharged more easily and constructional advantages are afforded taking account of situations in which there were to be a layer of snow on the roof panels.

In a further embodiment, the distance between the two first beams is greater than the distance between two intermediate beams associated with a combination and/or than the distance between a second beam associated with a combination and an intermediate beam. The relevant frames thus have a rectangular shape in which the associated roof panel is inclined in the direction of the short side of the rectangular shape.

In general, it may be preferred for the angles of inclination for each of the roof panels to be identical to one another, even if the roof panels were to be inclined in opposite directions.

The total height occupied by the framework may be limited if the framework has a horizontal orientation.

A limitation of the installation height may also be relevant if the top sides of the first beams are at the same vertical level as the top sides of the second beams, and/or if the bottom sides of the first beams are at the same vertical level as the bottom sides of the second beams.

The aforementioned advantage may also be relevant if the intermediate beams extend, as viewed in a vertical direction, completely within the heights of the first beams and/or within the height of each of the second beams, and/or if the roof panels extend, as viewed in the vertical direction, within the heights of the first beams and/or within the heights of the second beams.

Rainwater may be discharged in a suitable manner if the intermediate beams or the second beams of each frame which are situated at a bottom edge of the inclined roof panel extending within this frame are each provided with a drainage channel for allowing rainwater to flow away to one or both ends of the relevant intermediate beam or second beam.

In this case, it may be further preferred for the intermediate beams or the second beams of each frame which are situated at the bottom edge of the inclined roof panel extending within this frame to be tube-shaped and to each be provided, directly above this bottom edge, with at least one opening such that rainwater which has fallen on the associated roof panel flows through the at least one opening, which respective openings are provided in upright longitudinal sides of the relevant intermediate beams or second beams. Thus, the discharge of rainwater can be hidden from view and this discharge does not require provision of a separate drainage channel.

Rainwater may also be discharged in a suitable manner if the drainage channels empty at one or both ends perpendicularly into one or two collecting drainage channels which form part of the first beams, wherein, in a further embodiment, the one collecting drainage channel or the two collecting drainage channels empty into at least one vertical drainage pipe which extends within an upright.

To limit the temperature under the terrace roof in the case of hot weather, a further embodiment is distinguished by the fact that at least some of the frames, preferably each frame, are/is provided with at least one first ventilation opening and at least one second ventilation opening, wherein the at least one first ventilation opening is provided below the roof panel associated with the relevant frame and the at least one second ventilation opening is provided above the roof panel associated with the relevant frame or above a roof panel associated with an adjacent frame, and the first beams, second beams and/or intermediate beams are configured to allow air to flow from a space below a roof panel via a first ventilation opening to a second ventilation opening and via the second ventilation opening to a space on the outer side of the terrace roof. Hot air tends to rise. It is specifically this air that can be given the opportunity to escape in the present embodiment, as a result of which the temperature under the terrace roof will be lower.

Use can advantageously be made of the tendency of hot air to rise if the at least one first ventilation opening is lower than the at least one second ventilation opening.

In a further embodiment, the terrace roof is also provided with a screening fabric device comprising fabric material which, in an open state of the screening fabric device, frees up or at least largely frees up the frames and, in a closed state of the screening fabric device, closes or at least largely closes the frames. In the closed state, the screening fabric device will limit the amount of light and radiation that reaches the bottom side of the terrace roof from the top side of the terrace roof.

In one embodiment, the fabric material in the closed state of the screening fabric device extends below the roof panels. The roof panels thus protect the fabric material from the top side.

A practical embodiment may be achieved if the screening fabric device comprises a piece of fabric per frame, said pieces of fabric each being configured to be able to be brought into the open state and into the closed state. The provisions that are provided per piece of fabric so as to operate the latter can then be of relatively lightweight design compared with the situation in which a single piece of fabric is provided for the screening fabric device as a whole.

Such a screening fabric device may also afford advantages if the terrace roof were to not be designed with roof panels as described above. In that case, it would be a terrace roof comprising uprights, two horizontal first beams and two horizontal second beams, which first beams and second beams are connected to one another at their ends and form a framework which rests on the uprights and which has a rectangular shape in top view, the terrace roof further comprising intermediate beams which extend parallel to and between the two second beams and the respective ends of which are connected to the two first beams, wherein combinations of two intermediate beams situated next to one another and the two horizontal first beams, and combinations of each second beam and the intermediate beam situated next to it and the two horizontal first beams, form rectangular frames, the terrace roof also being provided with a screening fabric device comprising fabric material which, in an open state of the screening fabric device, frees up or at least largely frees up the frames and, in a closed state of the screening fabric device, closes or at least largely closes the frames, wherein the screening fabric device comprises a piece of fabric per frame, said pieces of fabric each being configured to be able to be brought into the open state and into the closed state.

In one embodiment, the screening fabric device is configured to bring the pieces of fabric into the open state simultaneously and into the closed state simultaneously. This can afford advantages both regarding ease of use but also from the viewpoint of the provisions that are required for the operation of the pieces of fabric.

In a possible embodiment, the screening fabric device has a winding-up member having a winding-up body extending parallel to the second beams, and each piece of fabric is rolled onto the winding-up body in the open state of the screening fabric device and is unwound from this winding-up body in the closed state of the screening fabric device.

In this case, in a further embodiment, each piece of fabric is connected to a second beam or intermediate beam by one end and is connected to a winding-up body by an opposite end.

If, in the open state of the screening fabric device, each winding-up body is situated right below a second beam or intermediate beam, the terrace roof can be of compact design and the formation of shadows due to the winding-up body and the piece of fabric wound around it is limited.

An efficient way of operating the screening fabric device may be realized if each of the winding-up members is provided with an axle body which extends beyond an end of the winding-up body of the relevant winding-up member, wherein the axle bodies are mutually coupled via an elongate coupling body by means of which each of the axle bodies are rotatably connected, wherein the terrace roof further comprises a drive device for being able to move the coupling body in a first direction and in an opposite second direction, wherein the screening fabric device moves from the open position to the closed position due to movement of the coupling body in the first direction, and wherein the screening fabric device moves from the closed position to the open position due to movement of the coupling body in the second direction. The drive device can in this case be provided with a drive motor, but the drive device may, in principle, also be configured for manual driving.

In a further embodiment, the drive device comprises, for each of the winding-up members, a pinion connected to the associated axle body and a rack rigidly connected to a first beam, wherein each of the pinions engages with a rack, and, during operation, when the coupling body is being moved in the second direction, the winding-up members rotate together with the pinions in order to wind the associated pieces of fabric onto the winding-up members. It is for example possible for the rack to be formed of a plastics toothed belt.

For safety reasons, inter alia, it may be preferred for the coupling body to extend in a first beam.

In a further constructionally favourable embodiment, the drive device comprises a drive motor and a transmission which is operative between the drive motor and the coupling body, which transmission further comprises two winding-around bodies which are rotatable, due to the operation of the drive motor, and an elongate transmission member which is wound around the two winding-around bodies and which is connected to the coupling body.

Advantageously, the drive motor may in this case be provided in a second beam and/or
the transmission member may extend in a first beam such that the moving components can be hidden from view in a safe and attractive manner.

In a practical embodiment, the terrace roof is provided against the façade of a building, and the first beams extend parallel to the façade. It is in this case not necessary for the terrace roof to be constructionally connected to the building. This may even be preferred, in which case the terrace roof is completely self-supporting.

The invention will be explained in more detail below by means of the description of a possible embodiment of a terrace roof according to the invention with reference to the following figures:
Figure 1 shows an isometric view of a terrace roof;
Figure 2 schematically shows an isometric and partially cut-away view of a part of the terrace roof according to Figure 1;
Figure 3 shows an isometric and partially cut-away view of another part of the terrace roof according to Figure 1;
Figure 4 shows an isometric view of the terrace roof according to Figure 1, but cut through vertically;
Figures 5a to 5c show detail V in Figure 4 during three different phases of operation of the screening fabric device of the terrace roof;
Figure 6 shows an isometric view of the screening fabric device of the terrace roof according to Figure 1;
Figures 7a and 7b show detail VII in Figure 6 during two different phases of operation of the screening fabric device;
Figure 8 shows an isometric view of a further detail of the screening fabric device.

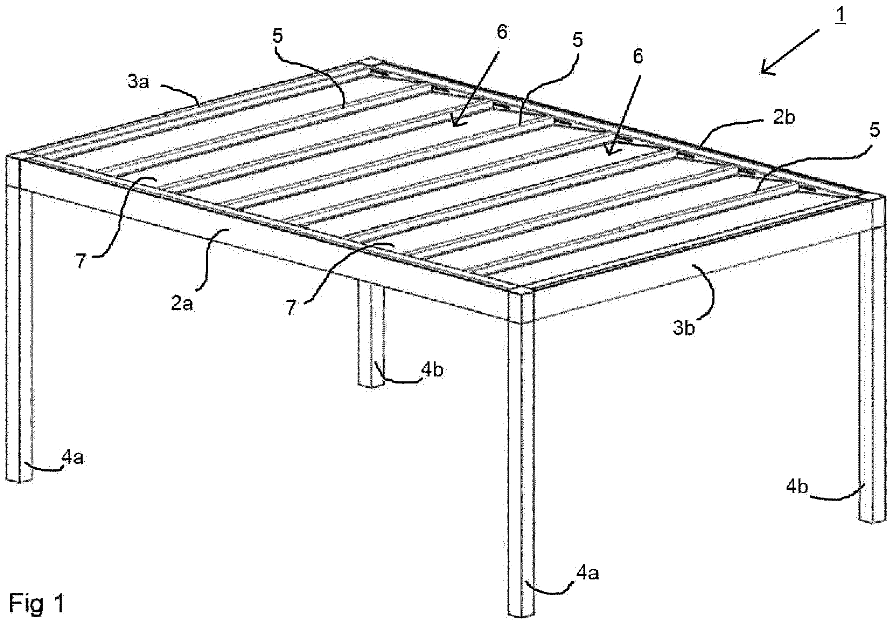

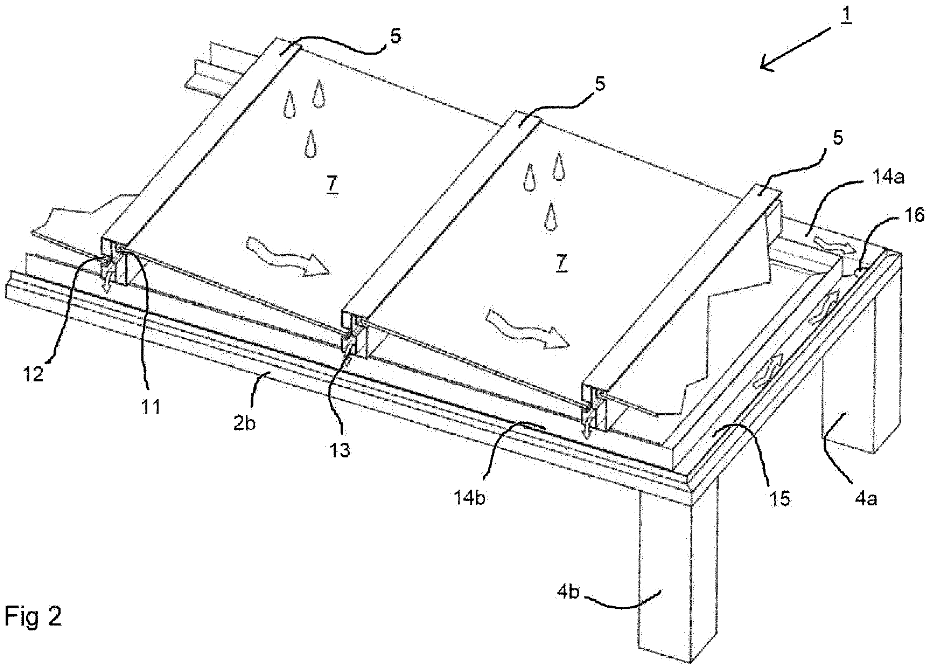

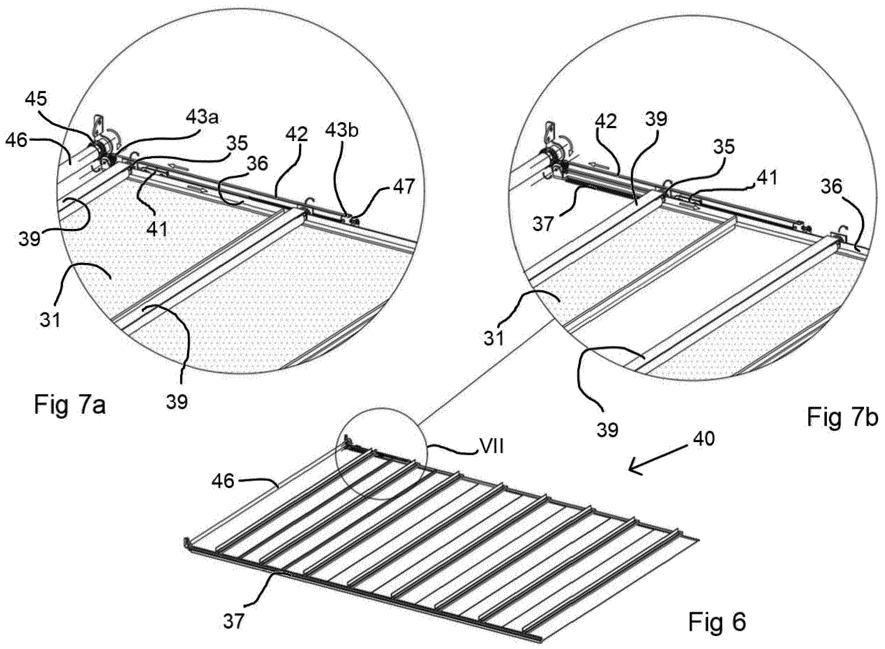

Terrace roof 1 according to Figures 1 to 8 comprises a rectangular framework of a rear longitudinal beam 2a, a front longitudinal beam 2b and two transverse beams 3a, 3b. Insofar as the distinction between the longitudinal beams 2a and 2b or between the transverse beams 3a and 3b is not relevant below, reference numerals 2 and 3 will be used for these longitudinal beams and transverse beams, respectively. The longitudinal beams 2 and transverse beams 3 are connected to one another at their ends via two rear uprights 4a and two front uprights 4b. Insofar as the distinction between the rear uprights 4a and the front uprights 4b is not relevant, reference numeral 4 will be used below for these four uprights. The aforementioned framework rests on the uprights 4. When using the terrace roof 1, the latter can be provided against a façade of a building, the front longitudinal beams 2b adjoining this façade and extending parallel thereto. In an alternative embodiment, it is then also possible for the roof panel to be designed without the front uprights 4b and for the front longitudinal beam 2b to then be fastened directly to the façade.

The terrace roof 1, more specifically said framework thereof, is further provided with seven identical intermediate transverse beams 5 which extend parallel to the transverse beams and in a manner distributed uniformly over the length of the longitudinal beams 2. Combinations of two intermediate transverse beams 5 situated next to one another and the two horizontal longitudinal members 2, and combinations of each transverse beam 3 and the intermediate transverse beam 5 situated next to it and the two horizontal longitudinal members 2, form rectangular frames 6 which are identical in terms of shape and size. The terrace roof 1 further comprises a transparent roof panel 7, for example made of glass, per frame 6, said roof panels each extending within the associated frame 6 and thus closing the latter such that rainwater cannot fall through the frames 6. In this case, the entire peripheral edge of each roof panel rests on the beams 2, 3 and/or 5 or at least the parts thereof that form the relevant frame 6. This means that each intermediate transverse beam 5 supports both the bottom longitudinal edge of a roof panel 7 and the top longitudinal edge of an adjacent roof panel 7. Each roof panel 7 is inclined with respect to a horizontal plane by an angle of about 5 degrees such that rainwater that falls on a roof panel 7 flows downwards. In this case, the roof panels 7 are inclined in the same direction which is parallel to the length direction of the two longitudinal beams 2.

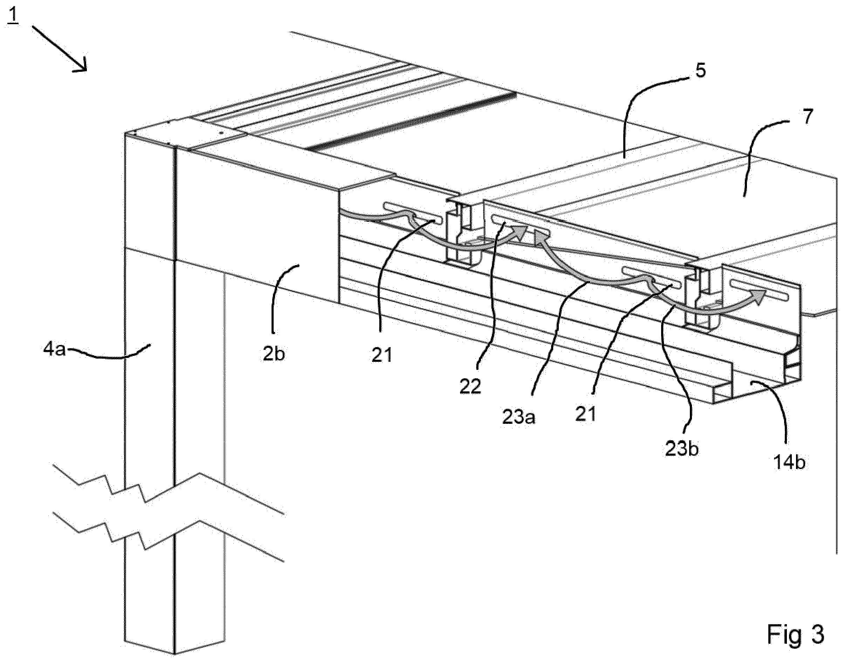

In the specific embodiment of terrace roof 1 according to Figure 1, the length of the longitudinal beams 2 is 600 cm, and the length of the transverse beams 3 is 425 cm. Greater lengths may also be used, although the cost price will then rise proportionally rapidly, for which reason preference is given to said lengths not being any greater. Said lengths may also be smaller. The longitudinal beams 2 and transverse beams 3 are extruded aluminium profiles whose dimensions in the vertical direction, that is to say whose heights, are identical to one another. Each of the longitudinal beams 2 and/or transverse beams may also be composed of two or more parallel profiles which are rigidly connected to one another. The top sides of the longitudinal beams 2 and transverse beams 3 are aligned with one another, and the bottom sides of the longitudinal beams 2 and of the transverse beams 3 are also aligned with one another. The height of the intermediate transverse beams 5 is smaller than that of the longitudinal beams 2 and transverse beams 3, but could also be identical thereto. As shown in Figure 3, the ends of the intermediate transverse beams 5 rest in recesses which are provided at regular distances from one another in the longitudinal beams 2 on mutually facing vertical sides thereof. In this case, the intermediate transverse beams 5 extend within the heights of the longitudinal beams 2 and transverse beams 3.

Each intermediate transverse beam 5 has a top chamber 11 and a bottom chamber 12 which extend over the entire length of the relevant intermediate transverse beam 5 and which are provided on opposite longitudinal sides of each intermediate transverse beam 5. The chambers 11 and 12 are open on said longitudinal sides and therefore have a horizontal gap which extends over the entire length of the intermediate transverse beams 5 such that top and bottom longitudinal edges of the roof panels 7 can be inserted in the relevant chambers 11, 12. The distance between adjacent intermediate transverse beams 5 and the (vertical) distance between the top chambers 11 and the bottom chambers 12 lead to each of the roof panels 7 being inclined as described above. Transverse beam 3a is also provided with a top chamber 11, whereas transverse beam 3b is also provided with a bottom chamber 12.

The heights of the gaps associated with the bottom chambers 12 is such that there is space for rainwater that falls on the roof panels 7 and that flows downwards over them to flow through these gaps into the bottom chambers 12. Provided above the roof panels 7, at the location of said gap of the bottom chambers, is a brush, which is not shown in any more detail and which extends over the entire length of the gaps. This brush allows rainwater to flow through it, but blocks other material such as autumn leaves. Each intermediate transverse bar 5 is further provided with an internal channel 13. The bottom chambers 12 are connected to the internal channel 13 of each intermediate transverse beam 5 such that rainwater flowing into the bottom chamber 12 flows through to the internal channel 13.

The ends of the internal channel 13 empty into internal channels 14 which are provided in the longitudinal beams 2. Internal channels 14 in turn connect to the ends of internal channels 15 which are provided in the transverse beams 3. In the rear legs 4a, a drainage tube 16 is provided at the connection between an internal channel 15 and the internal channel 14a there, which drainage pipe 16 is connected to a sewer system. Such a drainage tube 16 may also be provided only in one rear leg 4a and/or also in one or both front legs 4b.

In the mutually facing longitudinal sides of each longitudinal beam 2, a first ventilation opening 21 and a second ventilation opening 22 are provided per frame 6, that is to say per roof panel 7. The first ventilation openings 21 are provided below an associated roof panel 7, and the second ventilation openings 22 are provided just above it and are also each at a higher level than the first ventilation openings 21. Air, such as typically hot air which accumulates below a roof panel 7, can flow via a first ventilation opening 21, inside the relevant longitudinal beam 2 in the direction of arrows 23a, 23b to an adjacent second ventilation opening 22 and to a space on the outer side of the terrace roof 1.

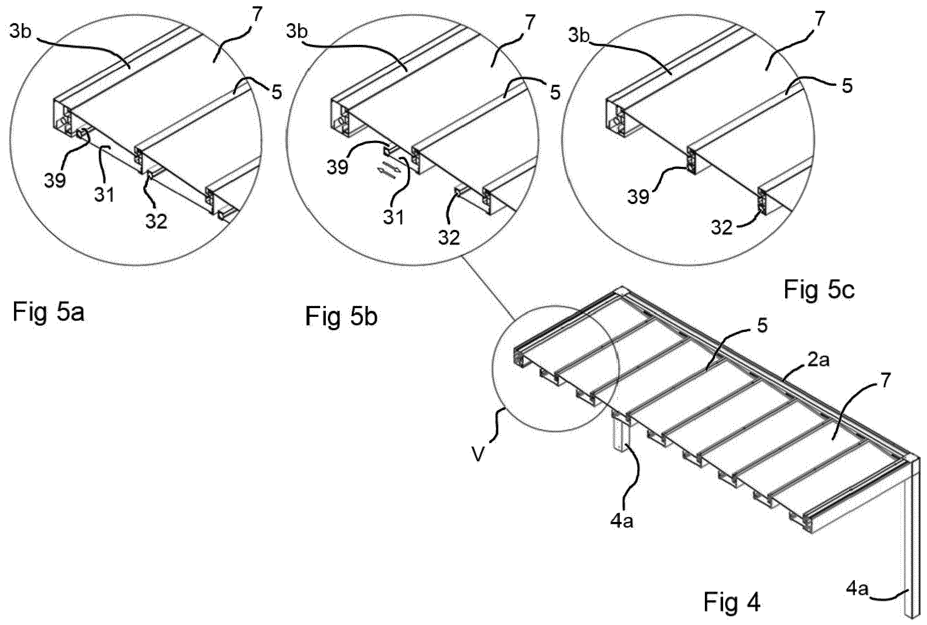

Terrace roof 1 further comprises a screening fabric device 40 which will be explained further by means of Figures 4 to 8. The screening fabric device 40 is provided below the roof panels 7. Per roof panel 7, the screening fabric device comprises a screening fabric 31 which is rolled onto a cylindrical winding-up body 32 in an open position of the screening fabric device (Figure 5c) and which is at least partially unwound from this winding-up body 32 in a closed position (Figure 5a). In this closed position, the screening fabric 31 blocks light passing through a roof panel situated above it. Figure 5d shows a position which is situated between the open position and the closed position.

Each piece of screening fabric 31 is fixedly connected, at one end of the screening fabric 31, to an intermediate transverse beam 5 or to transverse beam 3a via a coupling strip 33. Coupling strip 33 is made of a resilient plastics material, as a result of which coupling strip 33 is capable, due to the preload in coupling strip 33, of holding the screening fabric 31 under tension so as to prevent, or at least reduce, sagging of screening fabric 31. At the opposite end, the pieces of screening fabric 31 are connected to a winding-up body 32. Each winding-up body 32 is rotatable about an axis of rotation 34 which coincides with the axis of an axle body (not shown in any more detail) which is rigidly connected to a winding-up body 32 and by means of which a pinion 35 is also rigidly connected. Said axle bodies extend through guide holes in a coupling strip 36. The relevant guide holes allow free rotation of the axle bodies within these guide holes.

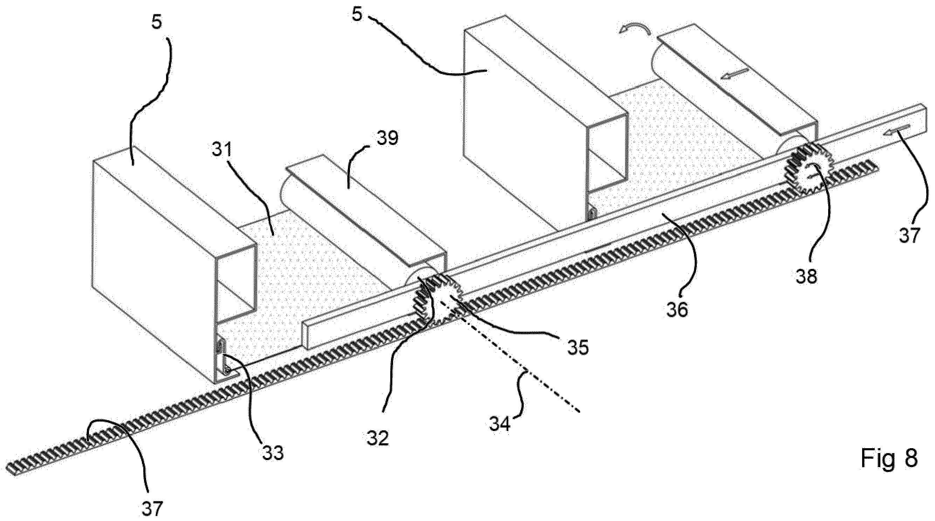

Each of the pinions 35 is in engagement with the teeth of rack 37 which extends within a longitudinal beam 2 over virtually the entire length thereof. On the basis of Figure 8, it is easy to see that the moving of coupling strip 36 in the direction of arrow 37 will have the effect that pinions 35 will rotate together with the associated winding-up body 32 in the direction of rotation 38 due to engagement of the pinions 35 with the rack 37 and that the winding-up bodies 32, already rotating about the associated axis of rotation 34, will move together with the coupling strip 36, as a result of which the pieces of screening fabric 31 will be rolled onto the respective winding-up bodies 32. It is also easy to see that a horizontal translation of coupling strip 36 in the direction opposite to arrow 37 will have the effect that the screening fabric 31 will be unwound (further) from the associated winding-up body 32, as a result of which the screening fabric device assumes the closed position.

In particular in Figure 8, it is also possible to see how horizontal U-shaped profile parts 39 surround the winding-up bodies 32, the shaping and dimensioning of the U-shaped profiles 39 being such that, in the open state of the screening fabric device, said profiles fit with the shaping of the intermediate transverse beams 5 such that the intermediate transverse beams 5 and the U-shaped profiles 39 visually, as it were, form one unit in this open position of the screening fabric device. It should incidentally be noted that the intermediate transverse profiles 5 are illustrated in a simplified form in Figure 8 for the sake of clarity.

In order to move the coupling strip 36 back and forth, that is to say in order to open and close the screening fabric device, the screening fabric device comprises a drive device. This drive device comprises a coupling element 41 which is coupled, on the one hand, to coupling strip 36 and, on the other hand, to an endless flexible transmission member 42, such as a belt, which is wound around winding-around bodies 43a, 43b which are each connected to a longitudinal beam so as to be rotatable about respective axes of rotation which extend parallel to each other and to the intermediate transverse beams 5. Winding-around body 43b in this case extends between the limbs of a U-shaped bracket 47. Winding-around body 43a is rigidly connected, via an axle body provided therefor, to an aligned pinion 44 which is in engagement with pinion 45 which is mounted on the output shaft of tube motor 46 which extends within transverse beam 3d. Excitation of tube motor 46 makes it possible to move coupling strip 36 back and forth in order to open and close the respective pieces of screening fabric 31, as is also illustrated in Figures 4 to 5c. The drive device is provided on the sides of both longitudinal beams 2, the tube motor being shared. Thus, torsion effects in the winding-up bodies 32 can be limited.

In an alternative embodiment, the pieces of fabric used, which are provided per frame 6, could also be of another type such as of the pleated type, in which case the operation of such pieces of fabric could be effected in a similar way to as described above, inter alia by means of Figure 8.

## Claims

1. Terrace roof (1) comprising uprights (4), two horizontal first beams (2) and two horizontal second beams (3), which first beams and second beams are connected to one another at their ends and form a framework which rests on the uprights and which has a rectangular shape in top view, the terrace roof further comprising intermediate beams (5) which extend parallel to and between the two second beams and the respective ends of which are connected to the two first beams, wherein combinations of two intermediate beams situated next to one another and of the two horizontal first beams, and combinations of each second beam and the intermediate beam situated next to it and of the two horizontal first beams, form rectangular frames (6), the terrace roof also further comprising a transparent roof panel (7) for each frame, said roof panels each extending within the associated frame, wherein each roof panel is inclined with respect to a horizontal plane in order to discharge rainwater, wherein each roof panel is inclined in a direction parallel to the two first beams (2).

2. Terrace roof according to Claim 1, wherein the angle of inclination by which each roof panel is inclined with respect to a horizontal plane is between 2 degrees and 15 degrees.

3. Terrace roof according to Claim 1 or 2, wherein the roof panels are inclined in the same direction, and/or wherein the angles of inclination for each of the roof panels are identical to one another.

4. Terrace roof according to one of the preceding claims, wherein the top sides of the first beams are at the same vertical level as the top sides of the second beams, and/or wherein the bottom sides of the first beams are at the same vertical level as the bottom sides of the second beams.

5. Terrace roof according to one of the preceding claims, wherein the intermediate beams extend, as viewed in a vertical direction, completely within the heights of the first beams and/or within the heights of the second beams, and/or wherein the roof panels extend, as viewed in the vertical direction, within the heights of the first beams and/or within the heights of the second beams.

6. Terrace roof according to one of the preceding claims, wherein the intermediate beams or the second beam(s) of each frame which are situated at a bottom edge of the inclined roof panel extending within this frame are each provided with a drainage channel (13, 15) for allowing rainwater to flow away to one or both ends of the relevant intermediate beam or second beam, wherein preferably the intermediate beams or the second beams of each frame which are situated at the bottom edge of the inclined roof panel extending within this frame are tube-shaped and are each provided, directly above this bottom edge, with at least one opening such that rainwater which has fallen on the associated roof panel flows through the at least one opening, which respective openings are provided in upright longitudinal sides of the relevant intermediate beams or second beams, wherein further preferably the drainage channels empty at one or both ends perpendicularly into one or two collecting drainage channels (14) which form part of the first beams.

7. Terrace roof according to one of the preceding claims, wherein at least some of the frames, preferably each frame, are/is provided with at least one first ventilation opening (21) and at least one second ventilation opening (22), wherein the at least one first ventilation opening is provided below the roof panel associated with the relevant frame and the at least one second ventilation opening is provided above the roof panel associated with the relevant frame or above a roof panel associated with an adjacent frame, and the first beams, second beams and/or intermediate beams are configured to allow air to flow from a space below a roof panel via a first ventilation opening to a second ventilation opening and via the second ventilation opening to a space on the outer side of the terrace roof, wherein preferably the at least one first ventilation opening is lower than the at least one second ventilation opening.

8. Terrace roof according to one of the preceding claims, wherein the terrace roof is also provided with a screening fabric device comprising fabric material (31) which, in an open state of the screening fabric device, frees up or at least largely frees up the frames and, in a closed state of the screening fabric device, closes or at least largely closes the frames, wherein preferably the fabric material in the closed state of the screening fabric device extends below the roof panels and/or the screening fabric device comprises a piece of fabric per frame, said pieces of fabric each being configured to be able to be brought into the open state and into the closed state.

9. Terrace roof according to Claim 8, wherein the screening fabric device comprises a piece of fabric per frame, said pieces of fabric each being configured to be able to be brought into the open state and into the closed state, and wherein the screening fabric device is configured to bring the pieces of fabric into the open state simultaneously and into the closed state simultaneously, wherein preferably the screening fabric device has a winding-up member having a winding-up body (32) extending parallel to the second beams, and each piece of fabric is rolled onto the winding-up body in the open state of the screening fabric device and is unwound from this winding-up body in the closed state of the screening fabric device.

10. Terrace roof according to Claim 8 or 9, wherein the screening fabric device comprises a piece of fabric per frame, said pieces of fabric each being configured to be able to be brought into the open state and into the closed state, and wherein each piece of fabric is connected to a second beam or intermediate beam by one end and is connected to a winding-up body by an opposite end.

11. Terrace roof according to Claim 10, wherein, in the open state of the screening fabric device, each winding-up body is situated right below a second beam or intermediate beam.

12. Terrace roof according to Claim 10 or 11, wherein each of the winding-up members is provided with an axle body which extends beyond an end of the winding-up body of the relevant winding-up member, wherein the axle bodies are mutually coupled via an elongate coupling body (36) which preferably extends in a first beam and by means of which each of the axle bodies are rotatably connected, wherein the terrace roof further comprises a drive device for being able to move the coupling body in a first direction and in an opposite second direction, wherein the screening fabric device moves from the open position to the closed position due to movement of the coupling body in the first direction, and wherein the screening fabric device moves from the closed position to the open position due to movement of the coupling body in the second direction, wherein preferably the drive device comprises, for each of the winding-up members, a pinion (35) connected to the associated axle body and a rack (37) rigidly connected to a first beam, wherein each of the pinions engages with a rack, and, during operation, when the coupling body is being moved in the second direction, the winding-up members rotate together with the pinions in order to wind the associated pieces of fabric onto the winding-up members.

13. Terrace roof according to Claim 12, wherein the drive device comprises a drive motor (46) and a transmission (45, 44, 43a, 42, 43b, 41) which is operative between the drive motor and the coupling body, which transmission further comprises two winding-around bodies which are rotatable, due to the operation of the drive motor, and an elongate transmission member which preferably extends in a first beam, which is wound around the two winding-around bodies and which is connected to the coupling body, wherein preferably the drive motor is provided in a second beam.

14. Terrace roof according to one of the preceding claims, wherein the terrace roof is provided against the façade of a building, and the first beams extend parallel to the façade.

15. Terrace roof according to one of the preceding claims, wherein the ends of the intermediate beams rest in recesses which are provided at regular distances from one another in the longitudinal beams on mutually facing vertical sides thereof.
